Europäisches Patentamt

European Patent Office

Office européen des brevets

(11) Veröffentlichungsnummer: **0 354 433**

**A2**

(12) # EUROPÄISCHE PATENTANMELDUNG

(21) Anmeldenummer: **89114068.3**

(22) Anmeldetag: **29.07.89**

(51) Int. Cl.⁴: **B01D 9/00**

(30) Priorität: **12.08.88 DE 3827455**

(43) Veröffentlichungstag der Anmeldung:
**14.02.90 Patentblatt 90/07**

(84) Benannte Vertragsstaaten:
**BE CH DE FR GB IT Li**

(71) Anmelder: **BAYER AG**

**D-5090 Leverkusen 1 Bayerwerk(DE)**

(72) Erfinder: **Kehm, Detlef, Dipl.-Ing.**
**Bucheckernweg 20**
**D-4220 Dinslaken(DE)**
Erfinder: **Weicht, Bodo, Dipl.-Ing.**
**Hermann-Ehlers-Strasse 14**
**D-5090 Leverkusen 1(DE)**
Erfinder: **George, Joachim, Dr.**
**Tannenweg 1**
**D-5090 Leverkusen 3(DE)**

(54) **Verfahren zur Stofftrennung durch Kühlkristallisation.**

(57) Bei dem Verfahren zur Stofftrennung nach dem Prinzip der Kühlkristallisation wird nach der Abscheidung der Kristallschicht im Kristallisator das restliche Gemisch entfernt und die Kristallschicht abgeschmolzen. Das Verfahren zeichnet sich dadurch aus, daß man das den Kristallisator vollständig ausfüllende Gemisch während der Erstarrung durch aufgezwungene Oszillationsbewegungen in Schwingungen versetzt und solange im Kristallisator beläßt, bis ein Erstarrungsgrad von 50 % bis 90 % erreicht ist.

EP 0 354 433 A2

## Verfahren zur Stofftrennung durch Kühlkristallisation

Die Erfindung betrifft ein Verfahren zur Stofftrennung aus einem flüssigen Gemisch durch ein- oder mehrstufige Kühlkristallisation, bei dem nach der Abscheidung der Kristallschicht im Kristallisator das restliche Gemisch entfernt und die Kristallschicht abgeschmolzen wird.

Es sind zahlreiche Kristallisationsverfahren bekannt, die zwar nicht allgemein, jedoch bei bestimmten Trennproblemen mit Erfolg angewendet werden. Bekannt sind Verfahren, bei denen aus einem Lösungsmittel heraus kristallisiert wird, und solche, bei denen aus einer Schmelze heraus kristallisiert wird.

Dabei lassen sich wiederum zwei Gruppen von Verfahrenstypen unterscheiden. Bei der ersten Gruppe wird eine Kristallsuspension erzeugt, die mechanisch durch Filtrieren, Separieren usw. in Kristallgut und Mutterlauge zerlegt werden muß. Bei diesen Verfahren ist der apparative Aufwand relativ hoch, so daß sie sich meist nicht wirtschaftlich durchführen lassen.

Weiterhin haben diese Verfahren mit zunehmender Apparatedimensionierung erhebliche Probleme mit der hohen mechanischen Belastung der Förderorgane.

Bei der zweiten Gruppe wird eine zusammenhängende Kristallschicht gebildet, was die Trennung zwischen Kristallgut und Mutterlauge vereinfacht. Zwei Wege werden hierbei verwirklicht: Die Kristallisation aus einer ruhenden flüssigen Phase und die aus dünnen Grenzschichten einer bewegten flüssigen Phase.

Der erste Weg hat den Nachteil, daß die Trennwirkung der einzelnen Kristallisationsstufen durch eingeschlossene Mutterlauge und dendritisches Kristallwachstum infolge Unterkühlung oft nur gering ist. Dadurch wird eine wirtschaftliche Fahrweise erschwert.

Beim zweiten Weg, wie er beispielsweise in der DE-AS 17 69 123 beschrieben wird, wird das flüssige Gemisch als Rieselfilm über die Kühlflächen geleitet. Es eignet sich gut für die Reinigung von Produkten, die eine feste Kristallschicht mit glatter Oberfläche bilden.

Weiterhin ist in der DE-AS 26 06 364 ein Verfahren beschrieben, bei dem durch turbulente Strömung eine dünne Grenzschicht erzeugt wird, aus der heraus die Kristallschicht an der Wandung der Kristallisationszone gebildet wird.

Ein Nachteil dieser bekannten Verfahren besteht darin, daß zur Vermeidung von ungewollter Krustenbildung eine Begleitbeheizung für die Umlenk- und Förderrohre sowie die Förderorgane vorgesehen werden muß, wobei die Temperatur der flüssigen Phase Werte oberhalb des metastabilen Bereiches der Kristallisation erreichen. Diese zugeführte Wärme muß zusätzlich über die Kühlflächen des Kristallers aus der flüssigen Phase wieder abgeführt werden, was zu unwirtschaftlichen Verlängerungen des Prozesses führt. Zusätzlich entstehen durch das Einleiten der erwärmten flüssigen Phase Kristallschichten ungleichmäßiger Dicke im Einlaufgebiet des Kristallers (trichterförmige Kristallschichten). Dieses führt zu einer Verschlechterung der Raum-Zeit-Ausbeute, Gelegentlich werden auch dadurch die Kristallisationsapparate verstopft.

In der DE-OS 3 203 818 ist zusätzlich ein Verfahren beschrieben, bei dem die dünnen Grenzschichten ohne Umpumpen der flüssigen Phase durch am Boden des Kristallisationsbehälters eingeleitete Gasblasen erzeugt werden, aus denen heraus dann die Kristallschichten an der Wandung der Kristallisationszone gebildet wird. Ein wesentlicher Nachteil dieses Verfahrens besteht darin, daß das Gas bei vielen Produkten aus ökologischen Gründen zurückgeführt werden und damit vom kondensierbaren Anteil befreit werden muß.

Wie theoretische und experimentelle Untersuchungen gezeigt haben, wird die effektive Trennleistung bei der Kristallisation vor allem durch die Kristallisationsgeschwindigkeit und durch die Diffusionsverhältnisse in der Grenzschicht der Phasengrenzfläche fest/flüssig be stimmt. Um die Stoffaustauschbedingungen zu verbessern und die Grenzschichtdicke zu verringern, werden im allgemeinen Förderorgane eingebaut.

Zur Vermeidung der Mängel der bekannten Kristallisationsverfahren bestand daher die Aufgabe, ein Verfahren zu entwickeln, mit dem ohne externen Flüssigkreislauf und ohne Begasung der Kristallersäule aus dünnen Grenzschichten an gekühlten Flächen mit guter Trennwirkung Lösungen oder Schmelzen auskristallisiert werden können.

Diese Aufgabe wird, ausgehend von dem eingangs beschriebenen Verfahren, erfindungsgemäß dadurch gelöst, daß man das den Kristallisator vollständig ausfüllende Gemisch während der Erstarrung durch aufgezwungene turbulente Oszillationsbewegungen in Schwingungen versetzt und solange im Kristallisator beläßt, bis ein Erstarrungsgrad von 50 % bis 90 % erreicht ist.

Das erfindungsgemäße Verfahren ist sowohl für die Kristallisation aus der Schmelze der abzutrennenden Substanz als auch aus der Lösung der abzutrennenden Substanz in einem Lösungsmittel anwendbar und eignet sich für alle Substanzen, die sich auf einer festen, vorwiegend metallischen Oberfläche durch Wärmeabfuhr von der Rückseite auskristallisieren lassen.

Das erfindungsgemäße Verfahren zeichnet sich gegenüber bekannten Kristallisationsverfahren durch

2

eine Reihe von Vorteilen aus:
- Das kristallisierende flüssige Gemisch wird während des Kristallisationsvorgangs nicht umgepumpt und braucht daher auch nicht aufgeheizt zu werden.
- Vorteilhaft ist bei dem neuen Verfahren auch, daß ein gleichmäßiges Wachstum der Kristallschicht in den Kristallisationszonen erreicht wird.
- Ferner wird bei diesem Verfahren zur Verbesserung des Wärme- und Stoffaustauschs keine Gaseinperlung in die Kristallisationsflächen benötigt, wodurch dann bei vielen Produkten in einer zusätzlichen Apparatur die kondensierbaren Anteile entfernt werden müssen.
- Weiterhin kann die fluiddynamische Beanspruchung der Kristallschicht dem zu kristallisierenden Gemisch leicht angepaßt werden.
- Die Maßstabsvergrößerung in axialer Richtung kann ebenso problemlos durchgeführt werden, wie die Erhöhung des Durchsatzes über eine Vergrößerung der Zahl der Kristallrohre.

Bei einem vorgegebenen Gemisch kann der Erstarrungsgrad in bekannter Weise anhand der Erstarrungskurve berechnet werden, da der Erstarrungsgrad eine eindeutige Funktion der Temperatur ist.

Vorzugsweise wird die Amplitude und die Frequenz der Oszillationsbewegung bei einem gegebenen Stoffsystem und vorgegebenen Abmessungen des Kristallisators so eingestellt, daß ein Stoffübergangskoeffizient von 0,5 mm/min bis 20 mm/min, vorzugsweise 2 mm/min bis 10 mm/min, erreicht wird.

Vorzugsweise wird nach Beendigung der Erstarrung und Entfernung des restlichen Gemisches die Kristallschicht in mehreren Temperaturstufen abgeschmolzen und die so gewonnenen Fraktionen einzeln gesammelt.

Eine andere Methode zum Abschmelzen der Kristallschicht besteht darin, daß nach Ablassen der Mutterlauge eine Schmelze gleicher Zusammensetzung in den Kristallisator gefüllt wird.

Zur Durchführung dieses Kristallisationsverfahrens wird ein Kristallisationsapparat verwendet, der aus einem Wärmeaustauscher mit einem am Boden anschließenden Sumpf besteht und der erfindungsgemäß dadurch gekennzeichnet ist, daß dem Wärmeaustauscher ein Ausgleichsgefäß vorgeschaltet ist und daß unterhalb des Sumpfes eine Oszillationseinrichtung angeordnet ist, die dem erstarrenden Gemisch im Wärmeaustauscher eine turbulente Oszillationsströmung aufprägt.

Ausführungsbeispiele

Im folgenden wird die Erfindung anhand eines schematischen Fließbildes am Beispiel der Trennung von Nitrochlorbenzolisomeren (NCB) näher erläutert.

Der Kristallisator bestand bei diesem Versuch aus einem mit einem Heiz- bzw. Kühlmantel versehenen Wärmeaustauscher 1, an den sich ein Sumpfgefäß 2 anschließt. Der Kristallisator wird mittels der Heiz- bzw. Kühlkreisläufe 3, 4 temperiert. Als Wärmeaustauscher können Platten- oder Rohrbündelwärmeaustauscher eingesetzt werden, die zur Vergrößerung der wirksamen Oberfläche mit Einbauten versehen werden können.

Im vorliegenden Beispiel betrug der Rohrinnendurchmesser des Kristallisatorrohres 4,25 cm und die Kühllänge 90 cm.

Oberhalb des Kristallisators 1 ist ein Ausgleichsgefäß 5 angeordnet, das ebenfalls mit einem Temperierkreislauf 6 versehen ist. Das vorgeschaltete Ausgleichsgefäß 5 hat die Aufgabe, daß der Kristallisator 1 während der Erstarrung stets vollständig gefüllt ist. Anderenfalls würden im Kristallisator Kristallschichten ungleichmäßiger Dicke aufwachsen.

Das gesamte zu kristallisierende Substanzgemisch befindet sich bei Versuchsbeginn im beheizbaren Behälter 7. Zunächst wird die aus einem oszillierenden Faltenbalgpulsator bestehende Oszillationseinrichtung 8 angestellt und die Ventile 9 und 10 in den Zuleitungen zum Kristallisator geöffnet. Bei größeren Durchsätzen kann anstelle des Faltenbalgpulsators auch eine Kolben- bzw. Radialkolbenpumpe verwendet werden. Mittels der Pumpe 11 wird dann das geschmolzene Ausgangsprodukt aus dem Behälter 7 in den Kristallisator 1 überführt. Sobald das Ausgleichsgefäß 5 gefüllt ist, läuft das Gemisch über die Leitung mit dem Ventil 10 in den Vorratsbehälter 7 zurück. Danach wird die Pumpe 11 abgestellt und die Ventile 9 und 10 geschlossen.

Anschließend erfolgt die Erstarrung des Ausgangsproduktes im Kristallisator 1. Zu diesem Zweck wird der Temperierkreislauf 3 im Kristallisator 1 von Heizmittel auf Kühlmittel umgestellt. Die Kühlmitteltemperatur beträgt dabei 68 °C. Dadurch wird die zu Beginn der Kristallisation betragende Schmelzetemperatur von 90 °C unter die Erstarrungstemperatur abgesenkt, so daß sich an der Rohrinnenwand des Wärmeaustauschers 1 Kristalle abscheiden. Danach wird die Kühlmitteltemperatur innerhalb einer Stunde auf 48 °C erniedrigt. Um zu verhindern, daß auch im Ausgleichsbehälter 5 eine Erstarrung stattfindet, wird der Temperierkreislauf 6 während der Kristallisation auf einer geringfügig höheren Temperatur gehalten als der Temperierkreislauf 3 für den Wärmeaustauscher 1. Die Oszillationseinrichtung 8 sorgt dafür, daß dem auszukristallisierenden Gemisch im Kristallisator 1 eine oszillierende turbulente Vertikalströmung mit einer Amplitude von 4 cm und einer Frequenz von 1,67 s$^{-1}$ aufgeprägt wird. Durch die Oszillationsströmung wird der Stoffübergang während der Erstarrung wesentlich verbessert. Wichtig ist dabei, daß der Kristallisator während der Erstarrungsphase vollständig mit dem Gemisch gefüllt ist. Diese Bedingung kann aufgrund des vorgeschalteten Ausgleichsgefäßes 5 erfüllt werden.

Nach einer Kühlzeit von 60 Minuten und einer Kühlmittelendtemperatur von 48 °C ist der Erstarrungsvorgang beendet. Danach wird die verbliebene Mutterlauge im Kristallisator 1 abgelassen und anschließend der Kristallkuchen aufgeschmolzen. Dazu wird das Ventil 12 geöffnet, so daß die Ablauge in den Behälter 13 fließen kann. Sobald der Flüssigkeitsstand im Behälter 13 nicht mehr ansteigt, wird das Ventil 12 wieder geschlossen. Anschließend wird die Temperatur in dem mit dem Sumpf 2 verbundenen Heizmittelkreislauf 14 auf einen Wert oberhalb der Schmelzetemperatur des Kristallkuchens im Kristallisator 1 erhöht. Der ebenfalls an den Kristallisator (Sumpf 2) über das Ventil 15 angeschlossene Behälter 16 ist mit einer Schmelze gefüllt, die in ihrer Zusammensetzung dem auskristallisierten Endprodukt im Wärmeaustauscher 1 entspricht. Der Behälter 16 wird auf einer Temperatur oberhalb der Schmelzetemperatur gehalten.

Zum Aufschmelzen des Kristallkuchens im Kristallisator 1 werden die Ventile 17 und 18 am oberen Ende des Kristallisators geöffnet. Mittels der Pumpe 19 wird dann die reine, heiße Produktschmelze aus dem Behälter 16 in den Kristallisator gefüllt. Danach wird die Pumpe 19 abgestellt und die Ventile 17 und 18 geschlossen. Durch zusätzliche Wärmezufuhr über den Temperierkreislauf 3 wird sodann der Kristallkuchen abgeschmolzen. Diese Schmelze vermischt sich mit der aus dem Behälter 16 hochgepumpten Schmelze identischer Zusammensetzung. Anschließend wird das Ventil 15 wieder geöffnet und die Reinproduktschmelze in den Behälter 16 abgelassen. Das Reinprodukt kann über eine Leitung 20 dem Behälter 16 entnommen werden. Ein Teil des Reinproduktes bleibt jedoch im Behälter und steht somit bei der nächsten Charge wiederum zum Abschmelzen und Austragen des Kristallisats zur Verfügung.

Nach dem vorbeschriebenen Verfahren wurde unter Einhaltung der angegebenen Temperatur- und Zeitbedingungen 2130 g eines Gemisches aus 89,7 Gew.-% p-NCB, (Nitrochlorbenzol), 9,0 Gew.-% o-NCB und 1,3 Gew.-% m-NCB gereinigt. Der auskristallisierte Kristallkuchen hatte ein Gewicht von 1400 g mit einer Zusammensetzung von 95,2 Gew.-% p-NCB, 4,2 Gew.-% o-NCB und 0,6 Gew.-% m-NCB.

Beispiel 2

Zweistufige Erstarrung mit Schwitzvorgang in der ersten Stufe

Mit dem gleichen Ausgangsstoff und in der gleichen Anlage wie in Beispiel 1 wird eine zweistufige Kristallisation durchgeführt, wobei der Kristallkuchen nach der ersten Stufe geschwitzt wird. Der Erstarrungsvorgang der einzelnen Stufen erfolgt wie in Beispiel 1 beschrieben. Die oszillierende Bewegung wurde bei beiden Stufen mit einer Amplitude von 4 cm und einer Frequenz von 1.67 s$^{-1}$ ausgeführt. In der ersten Stufe wird die Kühlmitteltemperatur von 68 °C auf 58 °C innerhalb von zwei Stunden erniedrigt. Nach dem Ablassen der Mutterlauge wird der Kristallkuchen geschwitzt. Dazu wird der Temperierkreislauf 3 von Kühlung auf Heizung umgestellt. Die Heizmit teltemperatur wird innerhalb einer halben Stunde von 71 °C auf 73 °C erhöht. Das dabei anfallende Schwitzprodukt wird wie die Mutterlauge in den Behälter 13 abgelassen. Nach Beendigung des Schwitzvorgangs wird der Kristallisator wiederum mit einer Schmelze aus Behälter 16 gefüllt, die in ihrer Zusammensetzung dem auskristallisierten Endprodukt entspricht. Durch zusätzliche Wärmezufuhr über den Temperierkreislauf 3 wird sodann der Kristallkuchen abgeschmolzen und in den Behälter 16 abgelassen. Sobald kein Produkt mehr im Behälter 7 vorhanden ist, wird das vorgereinigte Produkt aus Behälter 16 in Behälter 7 umgefüllt. Die gesammelte Ablauge aus Behälter 13 wird entleert und einer weiteren Trennung zugeführt.

Nach dem vorbeschriebenen Verfahren wurde unter Einhaltung der angegebenen Temperatur- und Zeitbedingungen 2.230 g eines Gemisches aus 89,2 Gew.-% p-NCB, 9,5 Gew.-% o-NCB und 1,3 Gew.-% m-NCB gereinigt. Der auskristallisierte Kristallkuchen hatte nach dem Erstarrungsvorgang ein Gewicht von 1.390 g mit einer Zusammensetzung von 95,7 Gew.-% p-NCB, 3,7 Gew.-% o-NCB und 0,6 Gew.-% m-NCB, während der Kristallkuchen nach dem Schwitzvorgang noch ein Gewicht von 1.300 g mit einer Zusammensetzung von 96,6 Gew.-% p-NCB, 3,0 Gew.-% o-NCB und 0,4 Gew.-% m-NCB hatte.

In der zweiten Stufe wurd der Kristallisationsvorgang wie in Beispiel 1 durchgeführt. Die Kühlmitteltemperatur wurde von 75,5 °C auf 65,5 °C in zwei Stunden erniedrigt. Unter diesen Bedingungen erhält man

4

aus 2.190 g Schmelze einen Kristallkuchen mit einem Gewicht von 1.485 g und einer Zusammensetzung von 99,0 Gew.-% p-NCB, 0,8 Gew.-% o-NCB und 0,2 Gew.-% m-NCB.

## Zweistufige Erstarrung mit Schwitzvorgang in der ersten Stufe

### Stufe 1:

- Ausgangsprodukt: p-NCB      89,2 Gew.-%

                        o-NCB      9,5 Gew.-%

                        m-NCB      1,3 Gew.-%

                        2.230 g

- Erstarrungsbedingungen:

                        Amplitude      4 cm

                        Frequenz      100 Umd/min

                        Kühlmittelstarttemp.      $68^{\circ}$ C

                        Kühlmittelendtemp.      $58^{\circ}$ C

                        Kühlzeit      120 min

- Kristallkuchen 1:

                        p-NCB      95,7 Gew.-%

                        o-NCB      3,7 Gew.-%

                        m-NCB      0,6 Gew.-%

                        1,390 g

- Schwitzbedingungen:

                        Anfangstemperatur      $71^{\circ}$ C

                        Endtemperatur      $73^{\circ}$ C

                        Heizzeit      30 min

- Kristallkuchen 2:

| | |
|---|---|
| p-NCB | 96,6 Gew.-% |
| o-NCB | 3,0 Gew.-% |
| m-NCB | 0,4 Gew.-% |
| 1.300 g | |

## Stufe 2:

- Ausgangsprodukt: Konzentration wie bei Kristallkuchen 2
  2.190 g

- Erstarrungsbedingungen:

| | |
|---|---|
| Amplitude | 4 cm |
| Frequenz | 100 Umd/min |
| Kühlmittelstarttemp. | 75,5° C |
| Kühlmittelendtemp. | 65,5° C |
| Kühlzeit | 120 min |

- Kristallkuchen 1:

| | |
|---|---|
| p-NCB | 99,0 Gew.-% |
| o-NCB | 0,8 Gew.-% |
| m-NCB | 0,2 Gew.-% |
| 1.485 g | |

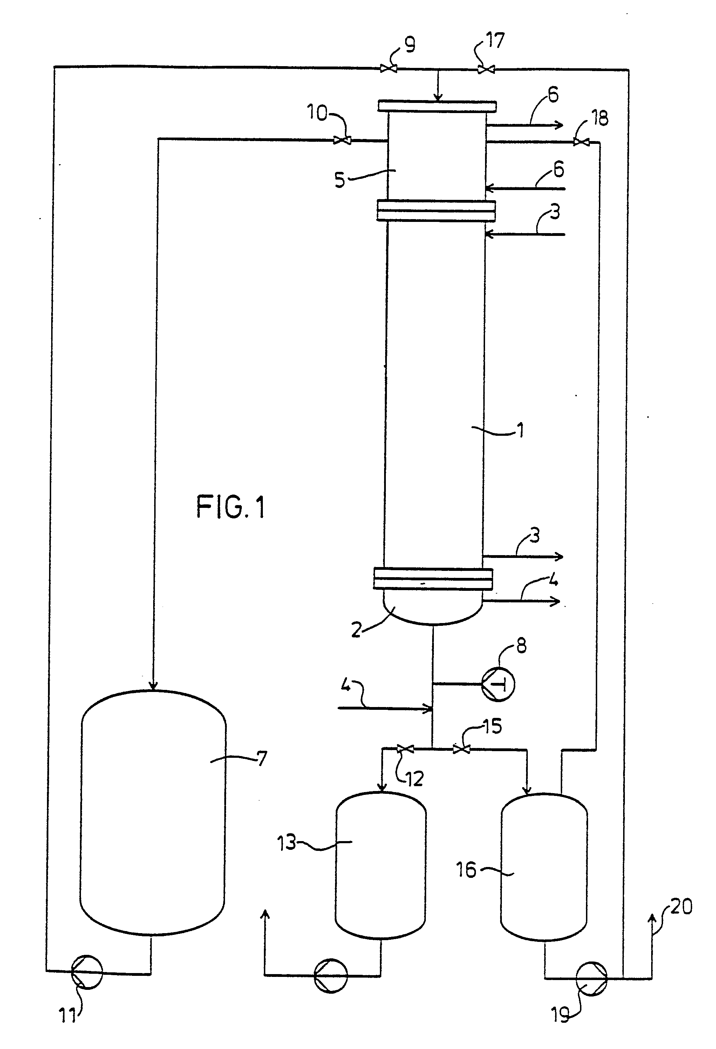

## Ansprüche

1. Verfahren zur Stofftrennung aus einem flüssigen Gemisch durch ein- oder mehrstufige fraktionierte Kühlkristallisation, bei dem nach der Abscheidung der Kristallschicht im Kristallisator das restliche Gemisch entfernt und die Kristallschicht abgeschmolzen wird, dadurch gekenzeichnet, daß man das den Kristallisator vollständig ausfüllende Gemisch während der Erstarrung durch aufgezwungene Oszillationsbewegungen in Schwingungen versetzt und solange im Kristallisator beläßt, bis ein Erstarrungsgrad von 50 % bis 90 % erreicht ist.

2. Verfahren nach Anspruch 1, dadurch gekennzeichnet, daß die Amplitude und die Frequenz der Oszillationsbewegung bei einem gegebenen Stoffsystem und vorgegebenen Kristallisatorabmessungen so eingestellt wird, daß ein Stoffübergangskoeffizient von 0,5 mm/min bis 20 mm/min, vorzugsweise 2 mm/min bis 10 mm/min, erreicht wird.

3. Verfahren nach Anspruch 1 bis 2, dadurch gekennzeichnet, daß man nach Beendigung der Erstarrung und Entfernung des restlichen Gemisches die Kristallschicht in mehreren Temperaturstufen abschmilzt und die so gewonnenen Fraktionen einzeln sammelt.

4. Verfahren nach Anspruch 1 bis 2, dadurch gekennzeichnet, daß zum Abschmelzen der Kristallschicht eine Schmelze gleicher Zusammensetzung in den Kristallisator gefüllt wird.

5. Vorrichtung zur Durchführung des Verfahrens nach Anspruch 1 bis 4, bestehend aus einem Kristallisator mit einem Wärmeaustauscher (1) und zugehörigem Temperierkreislauf (3) und mit einem an den Boden des Wärmeaustauschers (1) anschließenden Sumpfgefäß (2), dadurch gekennzeichnet, daß dem Wärmeaustauscher (1) ein Ausgleichsgefäß (5) vorgeschaltet ist, das mit einem separaten Temperierkreislauf (6) versehen ist und an dessen oberem Ende die zu kristallisierende Substanz zugeführt wird und daß unterhalb des Sumpfes eine Oszillationsvorrichtung (8) angeordnet ist, die dem Gemisch im Kristallisator während der Erstarrung eine turbulente oszillierende Strömung aufprägt.

FIG.1